# EUROPÄISCHE PATENTANMELDUNG

(11) **EP 1 139 536 A2**
(43) Veröffentlichungstag der Anmeldung: **04.10.2001**
(21) Anmeldenummer: 01850043.9
(22) Anmeldetag: 05.03.2001
(51) Int. Cl.: H02G 3/08

(54) **Schutzhülle für elektrische Bauteile sowie Blindpropfenzuschnitt dafür**

(30) Priorität: 29.03.2000 SE 0001107
(71) Anmelder: HIAB AB, S-824 83 Hudiksvall (SE)
(72) Erfinder: Henning,Jan-Ake, 82076 Jättendal (SE)
(74) Vertreter: Johansson, Lars E.

(57) **Zusammenfassung**

Die Erfindung bezieht sich auf eine Schutzhülle für elektrische Bauteile, welche einen Kastenteil (1) und einen Deckel aufweist, zwischen welchen eine Dichtung (3) von einem Material das eine höhere Elastizität als das Material des Kastenteils und des Deckels hat. Kennzeichnend für die Erfindung ist, daß Kabeldurchführungen (19) in der Form von herausragenden Rohrstücken mit der Dichtung (3) integriert sind, wobei jede Kabeldurchführung anfangs eine Bodenplatte aufweist, welche nach Bedarf unter Bildung eines Loches, durch welches ein Kabel in das Innere der Hülle eingeführt und vom Rohrstück umschlossen werden kann, abtrennbar ist.

## Beschreibung

### Technisches Gebiet der Erfindung

In einem ersten Aspekt bezieht sich die Erfindung auf eine zum Einschliessen von elektrischen Bauteilen vorgesehene Schutzhülle von der Art, die einen kastenförmigen Grundteil und einen Deckel aufweist, zwischen welchen eine Dichtung von einem Material, daß eine höhere Elastizität als das Material des Grundteils bzw. des Deckels hat, vorgesehen ist, wobei die Dichtung die Aufgabe hat Eindringen von Feuchtigkeit in das Innere der Hülle durch ihre Elastizität zu verhindern, und wobei die Hülle Durchführungen für Kabel zu den im Inneren der Hülle montierten Bauteilen aufweist.

### Stand der Technik

Herkömmliche Kabeldurchführungen für Schutzhüllen der obengenannten Art haben die Form von allgemein zylindrischen Hülsen, welche von einer Flansche nach hinten eine Aussengewinde für eine Mutter aufweisen, mit deren Hilfe die Hülse in einem in einer Wand in der Hülle ausgenommenen Loch fixiert werden kann. Ein von der Flansche nach vorne sich erstreckendes Teil der Hülse ist ebenfalls mit einer Aussengewinde versehen, um einen mit einer Innengewinde versehenen ringförmigen Hut empfangen zu können. Die Hülse weist an ihrem freien Vorderende eine Anzahl von Axialschlitzen, die eine Anzahl von elastisch nachgiebigen Zungen trennen, die sich gegen ein in die Kabeldurchführung eingeführtes Kabel pressen lassen, und zwar durch Festschrauben des genannten Huts auf das vordere männliche Gewinde der Hülse. Kabeldurchführungen oder sogenannte Kabelverschraubungen dieser Art sind aus mehreren verschiedenen Gründen nachteilig. Ein Grund ist, daß die Kabeldurchführung als solche einen hohen Kaufpreis hat und die Gesamtkosten für die ganze Schutzhülle in unverhältnismässiger Weise belastet. Ein anderer Grund ist, daß die Montierung von jeder einzelnen Kabeldurchführung in dem zugehörigen Loch in der Schutzhülle zeitraubend und eintönig ist. Dies trägt zu hohen Arbeitskosten bei, da häufig vorkommende Schutzhüllen eine Menge von Kabeldurchführungen (z.B. 10-20 Stück) umfassen. Dazu kommt, daß die Kabeldurchführungen Platz verlangen. In vielen Fällen ist somit das Platzbedürfnis der Kabeldurchführungen kritisch für die Dimensionierung des Volumens von der Schutzhülle auf die Weise, daß die Hülle unnötig gross ausgestaltet werden muss, um die Montierung der Kabeldurchführungen zu ermöglichen.

### Aufgaben und Merkmale der Erfindung

Es ist in einem ersten Aspekt die Aufgabe der vorliegenden Erfindung die obengenannten Nachteile der mit den bereits bekannten Kabeldurchführungen ausgerüsteten Schutzhüllen zu beseitigen und eine verbesserte Schutzhülle zu schaffen. Es ist deshalb eine grundliegende Aufgabe der Erfindung eine feuchtigkeitsgeschützte Schutzhülle, deren Kabeldurchführungen preiswert zu verwirklichen sein soll und eine schnelle Montierung der in Frage stehenden Kabel ohne viel Platz zu verlangen ermöglichen soll, zu schaffen. Es ist eine zusätzliche Aufgabe eine Schutzhülle deren Kabeldurchführungen stets in der Hülle selbst zugänglich sind, nicht nur bei der Anfangmontage der Bauteile und zuhörender Kabel, aber auch an anderen beliebigen Gelegenheiten während der Anwendung der Schutzhülle, zu schaffen.

Mindestens die grundliegende Aufgabe wird gemäss der Erfindung durch die im kennzeichnenden Teil des Anspruchs 1 angegebenen Merkmale gelöst. Eine bevorzugte Ausführungsform der Schutzhülle gemäss der Erfindung ist weiterhin in dem abhängigen Anspruch 2 angegeben.

In einem anderen Aspekt bezieht sich die Erfindung ebenfalls auf einen Blindpropfenzuschnitt, der für die genannte Schutzhülle vorgesehen ist. Die Merkmale dieses Blindpropfenzuschnittes gehen aus den Ansprüchen 3 und 4 hervor.

### Zusätzliche Erläuterung des Standes der Technik

Eine Schutzhülle für elektrische Bauteile, die aus einem Grundteil und einem Deckel zusammengesetzt ist, wird in GB 2179501 beschrieben. Ausnehmungen sind in den Wänden sowohl des Grundteils als auch des Deckels ausgebildet, in welcher separate Kabeldurchführungsplatten montiert sind, welche mit Abschnitten versehen sind, welche von den Platten abgebrochen werden können zur Bildung von erwünschten Löchern, durch welche Kabel in das Innere der Hülle hineingeführt werden können. Diese Kabeldurchführungsplatten haben jedoch nicht den Charakter von Dichtungen in bezug auf eine Verhinderung einer Eindringung von Feuchtigkeit in die Hülle. Die einzelne Durchführungen haben weiterhin die Form von einfachen Löchern, durch welche Feuchtigkeit und Schmutz wesentlich leichter als durch die elastischen Rohrstücke, die die Erfindung kennzeichnen, hineinkriechen können.

In US 4927984 wird eine Hülle mit Kabeldurchführungen in der Form von Rohrstücken beschrieben. Diese Rohrstücke sind jedoch von Standardverschraubungen von Hartkunststoff gebildet, welche durch ein Gewinde in einem anderen Hartkunststoffteil befestigt werden. Anders ausgedrückt, die als Standardverschraubungen gestalteten Rohrstücken sind in diese Konstruktion nicht mit einer feuchtigkeitsschützenden Dichtung integriert. Die Rohrstücke umfassen auch keine nach Bedarf abtrennbare Bodenplatten von der Art, die die Erfindung kennzeichnet.

### Kurze Beschreibung der anliegenden Zeichnungen

In den Zeichnungen sind:
Fig 1 eine perspektivische Ansicht einer Schutzhülle gemäss der Erfindung,
Fig 2 eine perspektivische Ansicht eines von der Schutzhülle umfassten Deckels, der in einem auf dem Kopf gestellten Zustand gezeigt wird,
Fig 3 eine perspektivische Ansicht eines von der Schutzhülle umfassten kastenartigen Grundteils sowie einer damit verbundenen Dichtung,
Fig 4 eine perspektivische Ansicht von lediglich der genannten Dichtung,
Fig 5 eine perspektivische Ansicht von lediglich dem kastenartigen Grundteil gemäss Fig 3,
Fig 6 ein vergrösserter Teillängsschnitt, der eine Anzahl von in der Dichtung vorkommenden Kabeldurchführungen darstellt,
Fig 7 ein Schnitt durch eine einzelne Kabeldurchführung bevor das Lochen,
Fig 8 ein entsprechender Schnitt nach Einführen eines Kabels in die Kabeldurchführung,
Fig 9 ein zusätzlicher Schnitt, die zeigt wie das Kabel durch einen Klammer gesichert wird,
Fig 10 ein Schnitt durch eine einzelne Kabeldurchführung, in welche ein Blindpropfen hineingeführt worden ist,
Fig 11 ein entsprechender Schnitt, der den mittels eines Klammers gesicherten Blindpropfen zeigt, und
Fig 12 eine perspektivische Ansicht eines Blindpropfenzuschnittes gemäss der Erfindung.

### Detaillierte Beschreibung der Erfindung

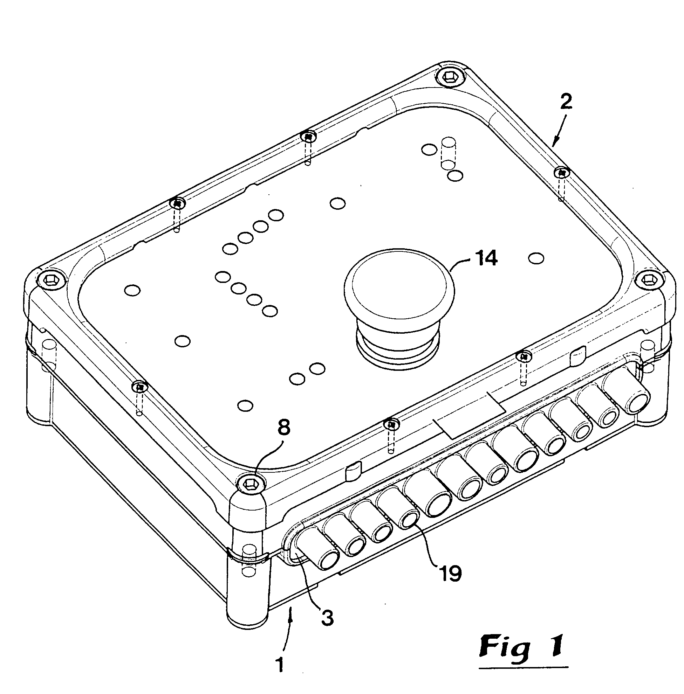

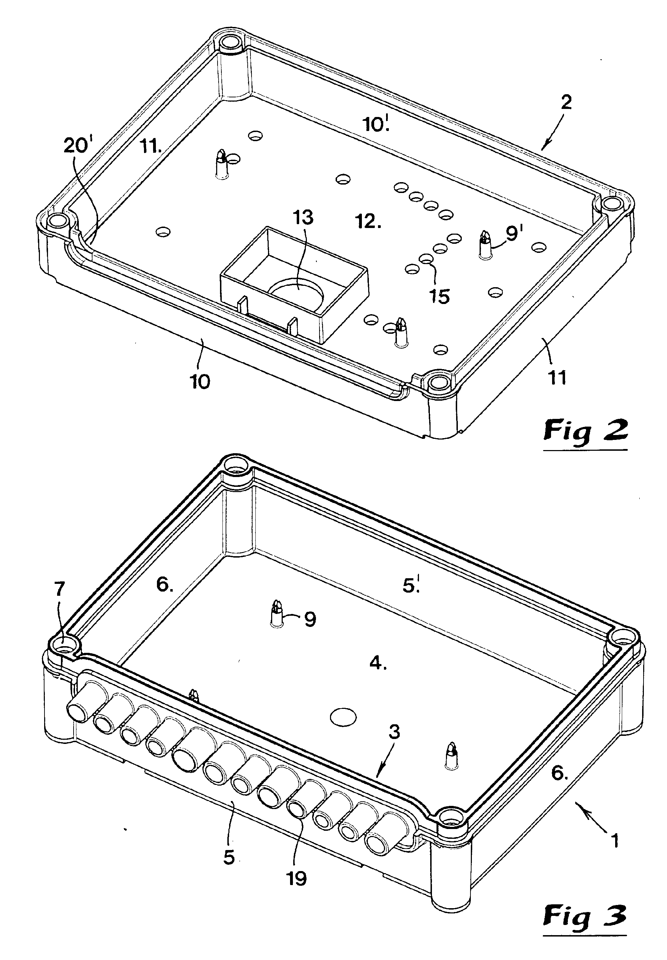

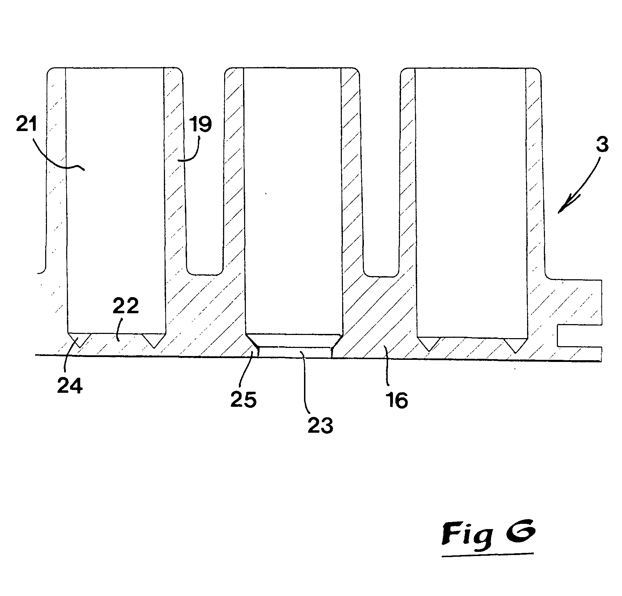

Eine mit parallelepipedischer Grundform ausgebildete Schutzhülle ist in Fig 1-5 veranschaulicht, wobei diese Hülle von einem kastenförmigen Grundteil 1, unten Kasten genannt, und einem Deckel 2 gebildet ist. Eine Dichtung 3 wirkt zwischen dem Kasten und dem Deckel. Wie es aus Fig 3 und 5 hervorgeht, ist der Kasten rechteckig und umfasst einerseits einen Boden 4 und andererseits vier Seitenwände, nämlich zwei gegenseitig parallele Langseitenwände 5, 5' und zwei gegenseitig parallele Kurzseitenwände 6. An den vier Ecken des Kastens sind Gewindelöcher 7 vorgesehen zum Empfang von Schrauben 8 (siehe Fig 1) mit dessen Hilfe der Deckel 2 mit dem Kasten lösbar verbindbar ist. Im Boden des Kastens sind Halter 9 zum Empfang von beliebigen elektrischen Bauteilen, z.B. Schaltungskarten, vorgesehen.

Obwohl der Deckel 2 an sich aus einer einfachen Platte bestehen könnte, wird es in der Praxis bevorzugt dieser mit vier Seitenwänden, nämlich zwei Langseitenwänden 10, 10' und zwei Kurzseitenwänden 11, die sich entlang den Kanten der eigentlichen Deckelplatte 15 erstrecken, zu versehen. Der Deckel kann ebenfalls Halter 9' für elektrische Bauteile aufweisen. In der Deckelplatte 12 selbst ist in dem Beispiel ein verhältnismässig grobes Loch 13 für einen Nothalteknopf 14 ausgenommen (siehe Fig 1). In der Deckelplatte 12 sind ebenfalls eine Anzahl von kleinen Löchern 15 ausgenommen, welche zum Empfang von Leuchtdioden (nicht gezeigt) zur Funktionsanzeige vorgesehen sind.

Obwohl die Wahl des Materials im Kasten 1 bzw. im Deckel 2 für die Durchführung der Erfindung nicht kritisch ist, wird bevorzugt diese Teile von verhältnismässig hartem und formbeständigem Kunststoff herzustellen, und zwar durch giessen des Kunststoffes. Die Schutzhülle wird dadurch beständig und schlagwiderstandsfähig.

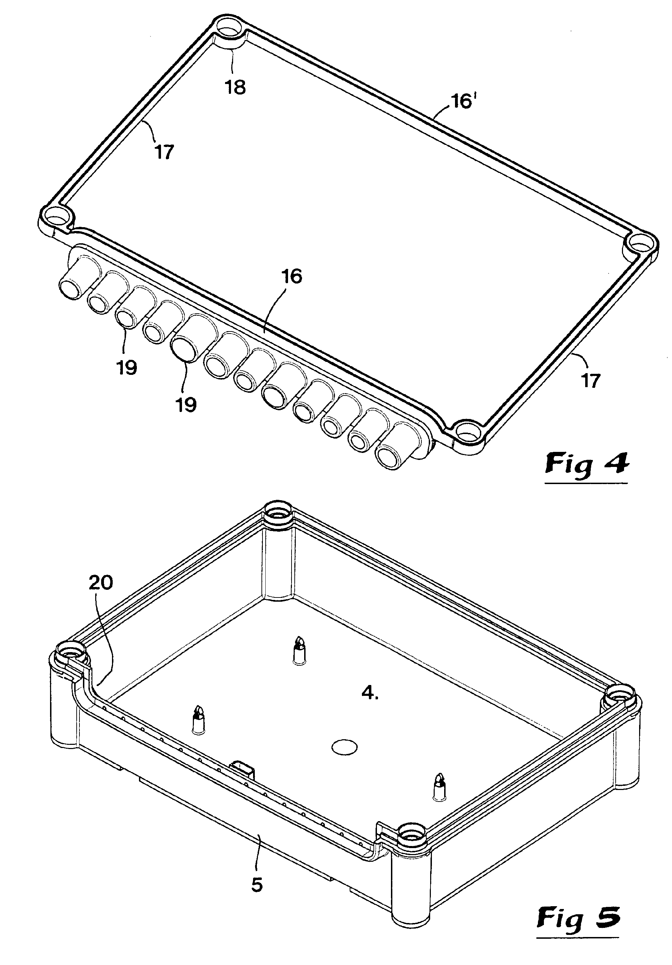

Es wird nun auf Fig 4 hingewiesen, welche die an der Grenzfläche zwischen den Wandabschnitten des Kastens und des Deckels gelegene Dichtung 3 illustriert, welche die Aufgabe hat die Eindringung von Feuchtigkeit in das Innere der Schutzhülle zu verhindern hat. Die Dichtung hat die Form eines rechteckigen Rahmens mit vier Rahmenstücke, nämlich zwei lange, gegenseitig parallele Rahmenstücke 16, 16' und zwei kurze, ebenfalls gegenseitig parallele Rahmenstücke 17. An den vier Ecken des Rahmens sind ringförmige Abschnitte 18 vorgesehen, durch welche die Schrauben 8 hindurchgeführt werden können. Wie es deutlich aus Fig 4 hervorgeht, ist das eine Langseitenrahmenstück 16 deutlich breiter als die drei übrigen Rahmenstücke 16', 17. Es ist für die Erfindung kennzeichnend, daß eine Anzahl von Kabeldurchführungen in der Form von herausragenden Rohrstücken 19 zu der Dichtung, und zwar das breite Rahmenseitenstück 16, gehören. Die Dichtung ist von einem Material, das weicher und mehr elastisch als das Material der Teile 1, 2 ist, gefertigt. Das Material kann beispielsweise aus Gummi oder elastischen Kunststoff bestehen. In der Praxis kann mit Vorteil ein Termoelast von hoher Qualität verwendet werden, z.B. von der Art die unter dem Warenzeichen HYTREL® im Handel vorkommt und die sehr beständig gegen chemische und mechanische Einflüsse ist. Es ist an sich möglich die Dichtung als eine getrennte Einheit, die im nachhinein mit beispielsweise dem Kasten durch Kleben oder dergleichen verbunden wird, herzustellen. Es ist jedoch ebenfalls möglich die Dichtung mit Kasten durch sogenanntes Doppelgiessen des Kastens und der Dichtung zu integrieren. Dabei wird die Dichtung direkt auf dem Kasten in einem zusammenhängenden Vorgang formgespritzt, sobald die Formgebung des Kastens beendet ist. Als eine dritte Alternative wird die Dichtung lose zwischen dem Kasten und dem Deckel montiert. Die als Kabeldurchführungen dienenden Rohrstücke 19 sind mit dem Rahmenstück 16 selbst durch ein Giessen oder Formspritzen in demselben Vorgang wie die Dichtung selbst integriert. In seinem mit dem Kasten 1 verbundenen und integrierten Zustand wird das breite Rahmenstück 16 der Dichtung in einer Versenkung 20 in der Langseitenwand 5 des Kastens 1 untergebracht. In dem gezeigten Beispiel erstreckt sich das breite Rahmenstück 16 nicht nur ein Stück nach unten von der für die übrigen Rahmenstücke 16', 17 gemeinsamen Ebene, aber auch ein Stück nach oben von dieser Ebene.

Aus diesem Grund ist eine flache Versenkung 20' ebenfalls in der Langseitenwand 10 des Deckels vorhanden.

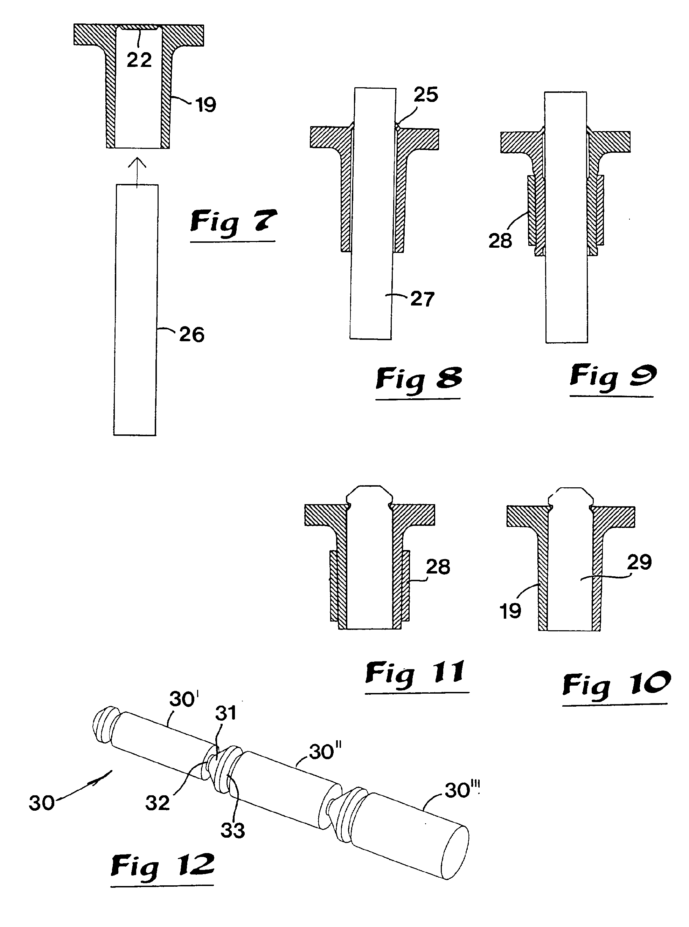

Eine Anzahl von einzelnen Rohrstücken 19, die zylindrische Läufe 21, in welche ein Kabel hineingeführt werden kann, abgrenzen, sind in Fig 6 im vergrösserten Masstab veranschaulicht. Am Anfang nach der Herstellung endet dieser Lauf 21 in einer Bodenplatte 22, die unter Bildung eines Loches 23 abtrennbar ist. In der gezeigten, bevorzugten Ausführungsform ist die Bodenplatte 22 von einer endlosen, ringförmigen Spur 24, deren Querschnitt V-förmig ist, abgegrenzt. Diese Ringspur bildet eine materialschwächende Bruchanzeige, die das Entfernen der Bodenplatte 22 erleichtert. Dies kann mittels eines zum diesen Zwecke geeigneten, dornförmigen Werkzeuges 26 (siehe Fig 7) durchgeführt werden. Wenn die Bodenplatte unter Bildung des Loches 23 entfernt wird, bleibt ein ringförmiger Wulst 25 um das Loch herum zurück. Der Wulst 25 selbst ist auf Grund der allgemeinen Elastizität von dem Material der Dichtung ebenfalls elastisch nachgiebig.

Es wird nun auf Fig 7-9 hingewiesen, die illustrieren wie ein Kabel in einer einzelnen Kabeldurchführung angebracht wird. Es wird in Fig 7 gezeigt, wie das Werkzeug 26 in das Rohrstück 19 hineingeführt werden kann, um die Bodenplatte 22 unter Bildung des Loches 23 abzutrennen und entfernen. Ein in das Rohrstück zum Anschluss an dazugehörenden elektrischen Bauteilen in der Schutzhülle eingeführtes Kabel 27 ist in Fig 8 gezeigt. Wenn das Kabel hineingeführt wird, dann wird der elastisch nachgiebige Wulst 25 weggepresst, welcher danach andauernd gegen die Manteloberfläche des Kabels unter Herstellung einer Luftdichtung gegen diese angepresst behalten wird. Der Wulst 25 hat ebenfalls eine mechanisch fixierende Wirkung insofern, daß er das Kabel in einer bestimmten axialen Lage in Verbindung mit der Montage des Kabels hält.

Es wird in Fig 9 gezeigt, wie das Kabel endgültig mittels einer Klammer gesichert wird, z.B. in der Form von einem konventionalen Metallclips, der nicht nur eine endgültige Fixierung des Kabels bewirkt, aber auch eine gute Dichtung des Rohrstückes 19 gegen das Kabel entlang einer grossen Fläche.

Es wird in Fig 10 und 11 gezeigt, wie ein Blindpropfen 29 nach Bedarf in eine Kabeldurchführung angebracht werden kann, in welche ein Loch schon angebracht worden ist, aber nicht zur Einführung eines Kabels verwendet werden wird. Solche Situationen können einerseits in Verbindung mit Montagearbeiten, wenn ein Loch aus Versehen gemacht werden kann, oder in späteren Gelegenheiten, wenn ein Bedarf das Kabel zu entfernen entsteht, entstehen. Der Blindpropfen 29 wird in Fig 10 in einer provisorisch eingesetzten Lage gezeigt, während Fig 10 der Blindpropfen in einem schlussmontierten Zustand illustriert, in welchem der Propfen von einem Metallclips 28 festgehalten wird.

Ein als ganze mit 30 bezeichneter Blindpropfenzuschnitt wird in Fig 12 illustriert. Bevor dieser Zuschnitt in Detail beschrieben wird, ist darauf hinzuweisen, daß die als Kabeldurchführungen dienenden Rohrstücke 19 verschiedene Durchmesser haben kann, um zu Kabeln mit verschiedenen Durchmessern zu passen. Dies bedeutet, daß ein Bedarf von Blindpropfen verschiedener Durchmesser vorhanden ist.

Der in Fig 12 gezeigte Zuschnitt 30 besteht aus einer aus einem steifen, formbeständigen Material, z.B. Hartkunststoff, gefertigten zylindrischen Stange, die drei Sektionen 30', 30", 30"' mit verschiedenen Durchmessern umfasst. Diese Sektionen sind axialgetrennt durch sich verjüngende Abschnitte 31, die in einer dünnen Spitze 32, die leicht abbrechbar ist, enden. Eine herumlaufende Spur 33 ist zwischen jeden sich verjüngenden Abschnitt 31 und dem Grundteil der einzelnen Stangensektion ausgebildet. Wie es aus Fig 10 und 11 hervorgeht, kann der vorgenannte Wulst 25 in dieser Spur festgedrückt werden, um die axiale Lage des gebildeten Blindpropfens 29 in das Rohrstück 19 zu bestimmen.

Ein wesentlicher Vorteil mit dem Blindpropfenzuschnitt gemäss der Erfindung ist, daß er sich in einem und demselben Werkzeug hergestellt werden lässt, um danach in einer einfachen und bequemen Weise eine Abtrennung eines einzelnen Blindpropfen mit einem gewünschten Durchmesser erlauben. Der Zuschnitt ist somit preiswert, da die Kosten für ein Formwerkzeug die Materialkosten von dem einzelnen Blindpropfen weit übersteigen.

Im Vergleich zu den bereits bekannten Schutzhüllen mit verschraubbaren Kabeldurchführungen von der eingangsgenannten Art hat die erfindungsgemässe Schutzhülle eine Vielzahl von Vorteilen. Ein grundlegender Vorteil ist die Tatsache, daß die Kosten für die einzelnen Kabeldurchführungen wesentlich niedriger als die Kosten für die bekannten Kabeldurchführungen werden. Dazu wird die Montage der Kabel vereinfacht, so daß diese Arbeit schnell und wirkungsvoll durchgeführt werden kann. Ausserdem haben die Kabeldurchführungen gemäss der Erfindung lediglich einen minimalen Platzbedarf, so daß viele Kabeldurchführungen entlang einer begrenzten Fläche erzielt werden können. Dies kann seinerseits eine Reduzierung von dem Totalvolumen der Schutzhülle ermöglichen.

### Denkbare Modifikationen der Erfindung

Die Erfindung ist nicht auf die oben beschriebenen und in den Zeichnungen gezeigten Ausführungsformen beschränkt. Somit kann die Schutzhülle als ganze eine andere Grundform als gerade parallellepipedisch gegeben werden. Die Hülle kann beispielsweise eine zylindrische Grundform haben. Weiterhin kann die Einzelteilgestaltung von sowohl dem kastenförmigen Grundteil als auch vom Deckel innerhalb weiter Grenzen variiert werden. U a kann die mit Kabeldurchführungen versehene Dichtung mit dem Deckel statt mit dem Grundteil verbunden werden. In diesem Zusammenhang ist ebenfalls darauf hinzuweisen, daß der Deckel bzw. der Grundteil im Prinzip dieselbe Grundform haben können.

## Patentansprüche

1. Schutzhülle für elektrische Bauteile, welche einen kastenförmigen Grundteil (1) und einen Deckel (2) aufweist, zwischen welchen eine Dichtung (3) von einem Material, das eine höhere Elastizität als das Material des Grundteils bzw. des Deckels hat, vorgesehen ist, wobei die Dichtung die Aufgabe hat Eindringen von Feuchtigkeit in das Innere der Hülle durch ihre Elastizität zu verhindern, und wobei die Hülle Durchführungen für Kabel zu den im Innern der Hülle montierten Bauteilen aufweist, **dadurch gekennzeichnet, daß** die Kabeldurchführungen mit der Dichtung (3) integriert sind und die Form von herausragenden Rohrstücken (19) haben, die aus demselben elastischen Material wie der Rest der Dichtung bestehen, und die anfangs je eine Bodenplatte (22) aufweisen, welche nach Bedarf unter Bildung eines Loches (23), durch welches ein Kabel in das Innere der Hülle eingeführt und vom elastischen Rohrstück umschlossen werden kann, abtrennbar ist.

2. Schutzhülle nach Anspruch 1, **dadurch gekennzeichnet, daß** die Bodenplatte (22) von einer endlosen Spur (24) abgegrenzt ist, welche eine schwächende Bruchanzeige um die Platte herum bildet und querschnittsweise im wesentlichen V-förmig ist, so **daß** beim Entfernen der Bodenplatte (22) einen elastisch nachgiebigen, gegen das Kabel dichtend anpressbaren Wulst (25) um das gebildete Loch (23) herum zurückbleibt.

3. Blindpropfenzuschnitt für Schutzhüllen nach einem der vorhergehenden Ansprüche, **gekennzeichnet durch** eine aus einem formsteifen Material gefertigte, zylindrische Stange (30) mit zwei oder mehreren Sektionen (30', 30", 30"') mit verschiedenen Durchmessern, welche **durch** sich verjüngende Abschnitte (31), die im Bereich einer Spitze (32) leicht abbrechbar sind, in der Axialrichtung getrennt sind, um einen nach Bedarf in eine offene Durchführung einführbaren Propfen von der Stange abzutrennen.

4. Blindpropfenzuschnitt nach Anspruch 3, **dadurch gekennzeichnet, daß** zwischen den sich verjüngenden Abschnitte (31) der einzelnen Stangensektion und dem zylindrischen Hauptteil der Sektion eine herumlaufende Spur (33) ausgebildet ist, in welche ein Wulst (25) um das Kabeldurchführungsloch herum eingreifen und einen einzelnen, abgetrennten Propfen in dem zuhörenden Rohrstück (19) festrasten kann.
